# EUROPEAN PATENT SPECIFICATION

(11) **EP 1 257 799 B1**
(45) Date of publication and mention of the grant of the patent: **16.12.2009**
(21) Application number: 00987547.7
(22) Date of filing: 21.12.2000
(51) Int. Cl.: G01M 17/00, G01N 21/88

(54) **METHOD FOR MONITORING TRANSPORT VEHICLES**
VERFAHREN ZUR ÜBERWACHUNG VON TRANSPORTFAHRZEUGEN
PROCEDE POUR LE CONTROLE DE VEHICULES DE TRANSPORT

(30) Priority: 22.12.1999 FI 992761
(43) Date of publication of application: 20.11.2002
(73) Proprietor: Visy Oy, 78250 Varkaus (FI)
(72) Inventor: VOUTILAINEN, Kalevi, FIN-78200 Varkaus (FI); GRANROTH, Petri, FIN-33230 Tampere (FI); SAARINEN, Kari, FIN-33720 Tampere (FI); LAINE, Mika, FIN-78310 Varkaus (FI)
(74) Representative: Pitkänen, Hannu Alpo Antero
(86) International application number: PCT/FI2000/001128
(87) International publication number: WO 2001/046668

(56) References cited:
- WO-A1-99/04248
- WO-A1-99/32725
- US-A- 4 913 551
- US-A- 4 918 321
- PATENT ABSTRACTS OF JAPAN & JP 10 009 841 A (NISSAN MOTOR CO LTD) 16 January 1998
- PATENT ABSTRACTS OF JAPAN & JP 11 271 038 A (NISSAN MOTOR CO LTD) 05 October 1999
- PATENT ABSTRACTS OF JAPAN & JP 11 184 933 A (TAJIMA KIKO:KK) 09 July 1999
- PATENT ABSTRACTS OF JAPAN & JP 10 170 304 A (TSUBASA SYST KK) 26 June 1998
- PATENT ABSTRACTS OF JAPAN & JP 10 035 320 A (HITACHI LTD) 10 February 1998

## Description

The present invention relates to a method for inspecting the condition of a transport vehicle, in which a vehicle which moves on wheels is photographed using one or more linear cameras, the object of the photograph is identified from the obtained pictures, and the condition of its structure is determined by comparing the information obtained from the picture data, such as identification data, dimensions, shapes and colors, to information previously saved about a corresponding object.

Until now, inspection of the condition of transport vehicles, such as trucks and their trailers, freight containers or train cars, has been primarily carried out visually. The person working on the inspection site records the identification data about the object of inspection and the eventual defects or damage in a condition inspection report, or other such form. If necessary, the damage is photographed, so that the case in question is casier to resolve afterwards in the least ambiguous way. Conclusions about the time when the changes in condition occurred are drawn based on consecutive inspections. This way, the information which is obtained acts as a supporting factor in matters such as settling liability for loss related to transport damages. This method has been in effect, but has often lead to subjective solutions. In order to reach a satisfactory result for all parties, it is necessary to have an impartial inspector familiar with the subject, nor can human error always be avoided.

Recently, different automatic photograph technologies and mechanical visualizing equipment have started to be used to identify transport vehicles. By using such equipment, a picture of the object to be inspected is saved, and on the basis of this picture, the object is identified. The identification is most commonly done by a person, but in the most developed equipment, it transpires automatically with a computer program. In conjunction with this, the idea arises of using the developed technology to inspect the objects. Some proto-type equipment stemming from this idea has been in testing. It has been functional, as such, but is not currently very competitive compared to traditional methods, due to the slow and expensive photographing technology which includes several cameras and effective lighting equipment.

In present inspection methods which use digital photographing technology, an actual inspection is still carried out by a person who uses several different stationary cameras to inspect several different pictures of an object taken from different angles. It is difficult to automatically find an identification mark in many of the pictures, in which the identification mark is either entirely or partially visible. Many individual pictures have to be looked at for the sake of identification, in order to programmatically obtain sufficient certainty concerning its correct identification and its connection to the object of inspection. This requires that a great amount of mutually unrelated picture material be stored, analyzed and reviewed, which is time-consuming.

Different photographing, inspection and control equipment for detecting surface defects and dimensional and shape deviations in automobile chasses has been developed for auto industry production lines. With this equipment, an object is photographed with a linear camera, which is either stationary, whereupon the object is moved, or mobile, whereupon the object is stationary. The dimensions of the object are known before photographing, and they are entered in advance into the computer processing pictures and/or measurement information. Furthermore, the speed of the object and its distance from the camera, as well as the conditions of the production lines are also standard, and/or previously known, the whole time. Thus, a correctly proportioned picture is obtained directly of the object, which can be compared, for example, to a corresponding flawless object, whereupon the eventual defects in the inspected object can be determined.

Method and device of this kind is known from US patent 6320654. In this patent has been presented a method for the automatic recognition of surface defects in body shells in a vehicle production process. In US patent 5396331 has been described a method for executing three dimensional measurement of measurable points on a measurable object such as an automotive body or press mold or like that utilizing correctively computing the absolute positions of CCD cameras when image data vary. This method is for measuring of a workpiece mounted on an objective position. This kind of methods and equipments, however, are not suitable for the inspection of transport vehicles on wheels, because in this case, the object of inspection is previously unknown, and its speed and distance from the camera and the direction of movements varies.

The object of the invention is to provide an automatic method of inspecting transport vehicles, whereby the condition of a transport vehicle on wheels, and in particular the objects which it is hauling, is determined. Furthermore, the object of the invention is to provide a method of inspecting transport vehicles, which is accurate and reliable, and advantageous in price and operational costs. Still further, the object of the invention is to provide an automatic method of inspecting transport vehicles, by which the other previously mentioned problems will be resolved.

The object of the invention is accomplished by a method for inspecting transport vehicles, the characteristics of which are presented in the claims.

In the method according to the invention the picture formed using a linear camera is modified programmatically to the correct dimensions on the basis of the comparison between the dimensions of standard parts of the object and information of dimensions of a corresponding object previously saved in the memory of the inspection equipment.

Thus, during the photographing phase, the distance of the object from the linear camera taking the photographs, and the object's direction and speed of movement can vary within a fairly large range. Furthermore, the precise distance, speed and direction of the object need not be determined in advance by measuring and calculating, rather, the picture taken by the linear camera can be formed independently of these factors by using a convenient standard photographing frequency. As a result of this, a method according to the invention can determine, for example, the condition of a truck, driving at an inconstant speed over the photographing spot, and/or the condition of its freight container/freight, significantly quicker and more reliably than previous methods. Furthermore, the condition can be determined reliably outside in varying conditions.

In an advantageous application of the invention, a transport vehicle is photographed from the side with a color linear camera. Thus, clearly a greater degree of reliability is achieved than with a black and white photograph, and a distinction can be made between objects with different colors, as well as between eventual alterations in their colors. Furthermore, this one picture of the entire side of the object is precise enough for an inspection, whereupon the necessity to spend time putting together several pictures of one case is avoided. Furthermore, when using a linear camera, there is no need to illuminate the entire object, but only a narrow linear area.

In a second advantageous application of the invention, a transport vehicle is photographed from the front and back with a color matrix camera. When photographing a side, which runs perpendicular to the direction of movement, such as the front or back end of a truck, the camera must be placed at an inclined angle in relation to it, whereupon shadows will be cast behind any eventual protruding parts which are not visible in the picture. A color matrix camera can photograph sides, which run perpendicular to the direction of movement, in their entirety, without the shadows of the protruding parts, as previously mentioned.

In a third advantageous application of the invention, the cameras are moving while they photograph the transport vehicle. If the cameras are moving, a linear camera can be used, even though the transport vehicle stays in place.

In a certain further application of the invention, at least both sides running lengthwise to the direction of movement are photographed. When implemented thus, the equipment, included in the inspection method, becomes simple and yet most of the object can be photographed.

In the following advantageous application of the invention, a transport vehicle is photographed from above. By photographing from above, the condition of the parts on the top of the transport vehicle can be inspected, such as the condition of the roof structures and machinery and fixtures located on the roof.

In a further advantageous application of the invention, a transport vehicle is photographed from beneath. By photographing from underneath, the condition of the parts underneath the transport vehicle can be inspected, such as the condition of the frame structure and other machinery, fixtures and coupling elements located underneath the transport vehicle.

In a further advantageous application of the invention, the object being hauled by the transport vehicle is primarily what is being photographed. This way, if desired, an inspection can be limited only to the object being hauled by the transport vehicle, the form and structure of the object being generally relatively simple. Thus, the processing of non-essential information from inspections is reduced and the process is accelerated.

Next, the invention will be explained in more detail with reference to the accompanying drawings, in which,
Figure 1 illustrates the flow chart of a mechanically viewed inspection method for a freight transport container, according to the invention,
Figure 2 illustrates the photographing along the length of a truck by a certain linear camera, which is part of the inspection method formed in accordance with the invention,
Figure 3 illustrates the picture obtained from the linear camera equipment in Figure 2 of a tractor trailer transport truck and its containers before corrections were made to the dimensions, as viewed from the side, and
Figure 4 illustrates pictures of the containers of the tractor trailer transport truck in Figure 3 separated from the truck and with corrections made to the dimensions.

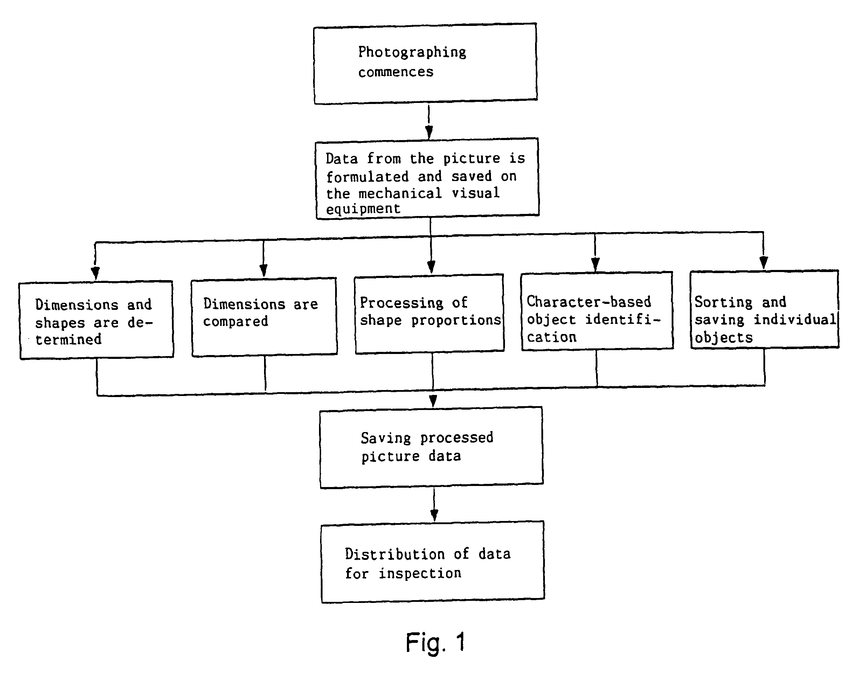

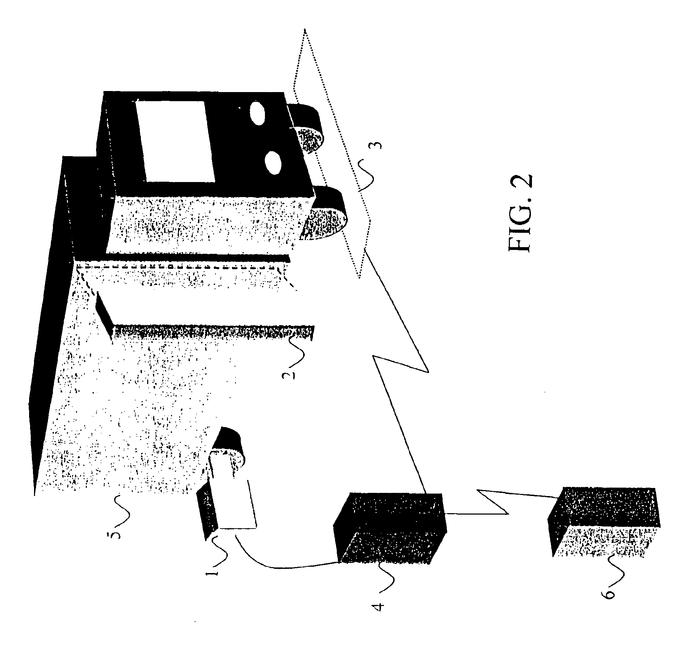

In a certain application of an inspection method according to the invention, the fundamental procedure of which is illustrated in the flow chart in Figure 1, the photographing equipment is in accordance with Figure 2. According to Figure 2, an application of the linear camera equipment of an inspection method according to the invention comprises a color linear camera I photographing the object, the truck 5, and a lighting device 2, which forms a narrow linear strip of light. The color linear camera is guided by a separate picture processing device 4, which is coupled to it, and which comprises in this case a computer and a picture processing card placed in its vacant card space. A timing device 3 which times the moment the photograph is taken is also mounted at the photographing spot, and it is connected to the picture processing device 4. The timing device 3 in this application is comprised of a proximity switch located on the ground. The picture processing device is additionally coupled to a separate picture data processing unit 6, which comprises a computer and the computer program installed in it.

The first phase of a method carried out according to the flow chart in Figure 1 is commenced by the photographing of the object. While the object is being photographed, it moves over the photographing spot at a speed which can be either steady or varied. The timing device 3 sends a message when the object is in place. When the picture processing device receives the message, linear camera I commences the photographing, while the object being photographed is lighted by the lighting device 2.

In the next phase, immediately when the object is in place at the photographing spot, the picture processing device 4 begins the formulation of the picture, the conversion into picture data and the saving of the unprocessed, prepared picture data into its memory, based on programmatic deduction. When the object has passed over the photographing spot, the picture processing device 4 deduces from the visible background picture, that the object has moved passed the photographing spot, whereupon the linear camera 1 can stop photographing. Subsequent to this, it generally takes a moment to formulate, convert and save the picture, tasks which transpire in the order mentioned above. The prepared unprocessed picture data is transferred on to the picture data processing unit 6.

In the third phase, the computer program in the picture data processing unit 6 determines firstly the correct dimensions and shapes of the object from the prepared picture data provided from the previous phases by comparing the dimensions of standard parts of the object with previously saved dimensions of a corresponding object. The comparison data is general in nature and objects on transport vehicles and/or freight are inspected from which the shape and/or linear measure of a certain photographing area are obtained. Firstly, the round shape of the tire can be used as comparison data, and from that the linear measure by proportion (not by dimension) can be obtained to get the right dimension for the picture. Other comparison data which can be used is, firstly, the diameter of the tire, or the standardized attachments of the gripping points on the containers, or other precisely known measurements. Secondly, the object of the picture, which has been modified to the right dimensions, is identified, which can possibly be checked based on the information obtained from the identifying lettering in the picture. When the object has been adjusted to the correct dimensions and identified, the comparison of the parts and structures of the object visible in the picture to the previously saved corresponding parts and structures begins. If the comparison shows distinct deviations from the corresponding parts in the previously saved pictures, it can be presumed that there are damaged parts in the object.

In the fourth phase, information about the damages in the object is saved automatically in a reliable inspection report, to which the inspection pictures are then also attached. If all of the parts of the object are found to be equivalent to the parts taken for the comparison, information is saved into the inspection report, which says that the inspection showed that the object is in adequate condition.

According to the flow chart in Figure 1, the last phase of the inspection method is the distribution of the condition inspection information produced in the automatic inspection, for example, via the Internet or other computer network, to the authorities or other sectors in need of the inspection information. If the inspection information reveals that serious damage has been done to the object, the message will advise on the commencement of corrective measures for the damages.

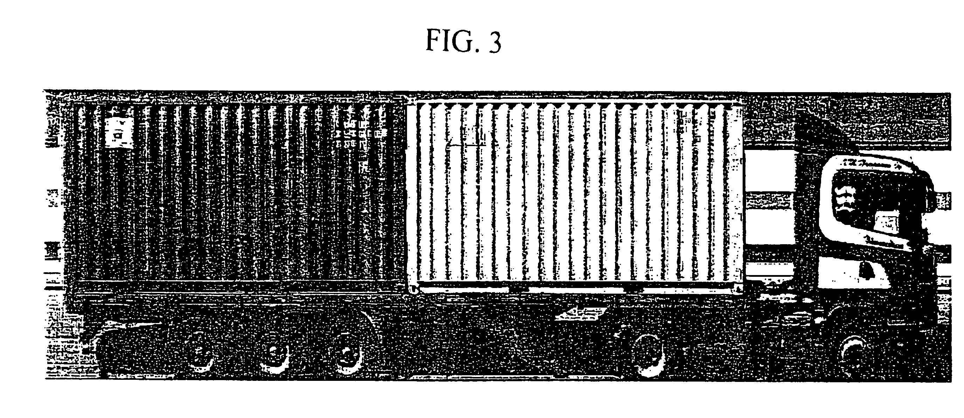

The picture of the transport truck, which was taken with the linear camera equipment, which is part of a condition inspection method, which is in accordance with pictures I and 2 shown in Figure 3, is printed out from the picture processing device 4 before it is transferred to the picture data processing unit 6. It can be seen from the distorted form of the truck tire, that the photographing frequency of the linear camera I which is used docs not directly yield the correct dimensions. The light lines which are visible behind the truck is the permanent background of the photographing spot. It would be advantageous to use an appropriately colored background during photographing, so that the individual points of the most of the objects would be as clear to distinguish as possible.

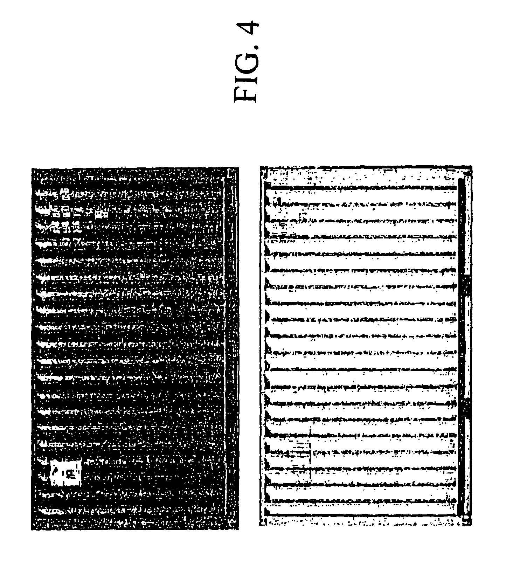

The pictures of the freight containers in Figure 4 do not show the truck which transports the containers, and the dimensions of the containers have been automatically adjusted to the correct dimensions in the picture data processing unit 6, using dimensions which were determined based on known standard dimensions of the containers.

The photographing equipment in the application illustrated in Figure 2 of a condition inspection method according to the invention can vary in the parts of its structure and its operational principle. The linear camera 1 can either be a color or grey scale camera. The lighting device 2 can be implemented using different lamps and light reflection arrangements. The timing device 3 can be a kind of sensor, other than a proximity switch, which is located on the ground. It can, for example, alternatively be a camera, radar device, weighing device or electric eye. The picture processing device can also be an electronic device, other than a computer with a picture processing card installed in it, which processes the picture. It can also carry out a part or all of the tasks performed by the picture data processing unit 6. The object 5 can be any transport vehicle which is suitable to be photographed by the equipment included in a method implemented according to the invention. In order to determine the dimensions of the object, a separate dimension or speed-determining method or equipment can be used. A certain possible method for obtaining the correct dimension data about an object, is to shine a spotlight-type light on the object, which will turn on and off when the object has moved a certain distance, which has been determined in advance. Thus, marks will be formed on the pictures with a known distance interval, and it will be easy to adjust the length of the object to the right dimensions programmatically.

According to the exemplary application presented, other linear or matrix cameras can be connected to the picture processing device in order to photograph other sides of the object, whereupon there is typically one linear camera per side. The cameras are mounted horizontally and vertically. The use of a linear camera is always justifiable when photographing the side of an object which runs lengthwise to the direction of movement of the object. When photographing a side which runs perpendicular to the object's direction of movement, a linear camera can only be used if the side is being photographed from a suitably selected diagonal angle, such that the movement of the object enables the formation of the picture from the linear camera. In this case, however, the distancing of the object from the camera must be considered; the picture is only precisely focused within certain boundaries, and when photographing diagonally, projections from the object will always cast shadows behind them, the size of which depends on the camera's angle in relation to the object side being photographed. If the sides which run perpendicular to the object's direction of movement are not very big, in most cases, better end results can be obtained if they are photographed with a matrix camera. In this case, the photographing range must be large enough, so that the resolution needs for the condition inspection are met.

Picture processing devices in other photographing spots can also be connected to one effective picture data processing unit, whereupon there would be more inspection information to be processed. In this case, more comparison material would also accumulate in the system, which would improve the reliability of the inspection. The capacity of the computer functioning as the picture data processing unit naturally sets the limit of the number of photographing spots. If necessary, this capacity can be increased, or other local network computers can be added to the system so that the picture data processing work can be distributed.

The invention is not limited to the presented advantageous application. It can vary within the frames of the idea of the invention formed in the claims.

## Claims

1. A method for inspecting the condition of a transport vehicle, in which a transport vehicle (5) which moves on wheels is photographed using one or more linear cameras (1), the object of the photograph is identified from the obtained pictures, the picture formed with a linear camera (1) is modified programmatically to the correct dimensions on the basis of information previously saved in the memory of the inspection equipment (6) and the condition of the structure of the object is determined by comparing the information obtained from the picture data, such as identification data, dimensions, shapes and colors, to information previously saved about corresponding object, **characterized in that** the picture is modified to the correct dimensions on the basis of the comparison between the dimensions of standard parts of the object and previously saved dimensions of a corresponding object.

2. A method for inspecting the condition of a transport vehicle in accordance with claim 1, **characterized in that** the transport vehicle (5) is photographed from the side using a color linear camera (1).

3. A method for inspecting the condition of a transport vehicle in accordance with claim 1 or 2, **characterized in that** the transport vehicle (5) is photographed from the front and back using a color matrix camera.

4. A method for inspecting the condition of a transport vehicle in accordance with any of claims 1-3, **characterized in that** the cameras (1) are moved during the photographing of the transport vehicle (5).

5. A method for inspecting the condition of a transport vehicle in accordance with any of claims 1-4, **characterized in that** at least both sides of the transport vehicle (5), which run lengthwise to the direction of movement are photographed.

6. A method for inspecting the condition of a transport vehicle in accordance with any of claims 1-5, **characterized in that** the transport vehicle (5) is photographed from above.

7. A method for inspecting the condition of a transport vehicle in accordance with any of claims 1-6, **characterized in that** the transport vehicle (5) is photographed from underneath.

8. A method for inspecting the condition of a transport vehicle in accordance with any of claims 1-6, **characterized in that** the object being hauled by the transport vehicle is primarily what is being photographed.

## Patentansprüche

1. Verfahren zur Untersuchung des Zustandes eines Transportfahrzeugs, wobei ein Transportfahrzeug (5), welches sich auf Rädern bewegt, mit einer oder mehreren Linearkameras (1) fotografiert wird, das Objekt der Fotografie aus den erhaltenen Bildern identifiziert wird, das mit einer Linearkamera (1) gebildete Bild auf der Basis der Informationen, die zuvor im Speicher des Untersuchungsgeräts (6) gespeichert wurden, programmatisch auf die richtigen Abmessungen modifiziert wird und der Zustand der Struktur des Objekts ermittelt wird, indem die aus den Bilddaten erhaltenen Informationen, z.B. Identifikationsdaten, Abmessungen, Formen und Farben, mit Informationen über ein entsprechendes Objekt verglichen werden, die zuvor gespeichert wurden, **dadurch gekennzeichnet, dass** das Bild auf der Basis des Vergleichs zwischen den Abmessungen von Standardteilen des Objekts und zuvor gespeicherten Abmessungen eines entsprechenden Objekts auf die richtigen Abmessungen modifiziert wird.

2. Verfahren zur Untersuchung des Zustands eines Transportfahrzeugs nach Anspruch 1, **dadurch gekennzeichnet, dass** das Transportfahrzeug (5) mit einer Farb-Linearkamera (1) von der Seite fotografiert wird.

3. Verfahren zur Untersuchung des Zustands eines Transportfahrzeugs nach Anspruch 1 oder 2, **dadurch gekennzeichnet, dass** das Transportfahrzeug (5) mit einer Farb-Matrixkamera von der Vorderseite und der Rückseite fotografiert wird.

4. Verfahren zur Untersuchung des Zustands eines Transportfahrzeugs nach einem der Ansprüche 1 bis 3, **dadurch gekennzeichnet, dass** die Kameras (1) während des Fotografierens des Transportfahrzeugs (5) bewegt werden.

5. Verfahren zur Untersuchung des Zustands eines Transportfahrzeugs nach einem der Ansprüche 1 bis 4, **dadurch gekennzeichnet, dass** zumindest beide Seiten des Transportfahrzeugs (5) fotografiert werden, die parallel zur Bewegungsrichtung verlaufen.

6. Verfahren zur Untersuchung des Zustands eines Transportfahrzeugs nach einem der Ansprüche 1 bis 5, **dadurch gekennzeichnet, dass** das Transportfahrzeug (5) von oben fotografiert wird.

7. Verfahren zur Untersuchung des Zustands eines Transportfahrzeugs nach einem der Ansprüche 1 bis 6, **dadurch gekennzeichnet, dass** das Transportfahrzeug (5) von unten fotografiert wird.

8. Verfahren zur Untersuchung des Zustands eines Transportfahrzeugs nach einem der Ansprüche 1 bis 6, **dadurch gekennzeichnet, dass** hauptsächlich das Objekt fotografiert wird, das von dem Transportfahrzeug transportiert wird.

## Revendications

1. Procédé d'inspection de l'état d'un véhicule de transport, dans lequel un véhicule de transport (5) qui se déplace sur des roues est photographié en utilisant une ou plusieurs caméras linéaires (1), l'objet de la photographie est identifié à partir des images obtenues, l'image formée avec une caméra linéaire (1) est modifiée de manière programmatique aux dimensions correctes sur la base des informations précédemment enregistrées dans la mémoire de l'équipement d'inspection (6) et l'état de la structure de l'objet est déterminé en comparant les informations obtenues à partir des données d'image, comme des données d'identification, des dimensions, des formes et des couleurs, aux informations précédemment enregistrées en ce qui concerne l'objet correspondant, **caractérisé en ce que** l'image est modifiée aux dimensions correctes sur la base de la comparaison entre les dimensions de parties standard de l'objet et les dimensions précédemment enregistrées d'un objet correspondant.

2. Procédé d'inspection de l'état d'un véhicule de transport selon la revendication 1, **caractérisé en ce que** le véhicule de transport (5) est photographié par le côté en utilisant une caméra linéaire couleur (1).

3. Procédé d'inspection de l'état d'un véhicule de transport selon la revendication 1 ou 2, **caractérisé en ce que** le véhicule de transport (5) est photographié par l'avant et par l'arrière en utilisant une caméra matricielle couleur.

4. Procédé d'inspection de l'état d'un véhicule de transport selon l'une quelconque des revendications 1 à 3, **caractérisé en ce que** les caméras (1) sont déplacées pendant que le véhicule de transport (5) est photographié.

5. Procédé d'inspection de l'état d'un véhicule de transport selon l'une quelconque des revendications 1 à 4, **caractérisé en ce qu'**au moins les deux côtés du véhicule de transport (5) qui sont longitudinaux par rapport à la direction de déplacement sont photographiés.

6. Procédé d'inspection de l'état d'un véhicule de transport selon l'une quelconque des revendications 1 à 5, **caractérisé en ce que** le véhicule de transport (5) est photographié par dessus.

7. Procédé d'inspection de l'état d'un véhicule de transport selon l'une quelconque des revendications 1 à 6, **caractérisé en ce que** le véhicule de transport (5) est photographié par dessous.

8. Procédé d'inspection de l'état d'un véhicule de transport selon l'une quelconque des revendications 1 à 6, **caractérisé en ce que** l'objet étant transporté par le véhicule de transport est principalement ce qui est photographié.
